# EUROPEAN PATENT SPECIFICATION

(11) **EP 1 958 390 B1**
(45) Date of publication and mention of the grant of the patent: **21.05.2014**
(21) Application number: 05803870.4
(22) Date of filing: 17.11.2005
(51) Int. Cl.: H04L 12/18, H04L 12/911

(54) **FEEDBACK TECHNIQUE FOR A HIERARCHICALLY ORGANIZED BROADCAST/MULTICAST SERVICE AREA**
RÜCKKOPPLUNGSTECHNIK FÜR EINEN HIERARCHISCH ORGANISIERTEN BROADCAST/MULTICAST-DIENSTBEREICH
TECHNIQUE RETROACTIVE D'ORGANISATION HIERARCHIQUE DE ZONE DE SERVICES DE DIFFUSION ET DE MULTIDIFFUSION

(43) Date of publication of application: 20.08.2008
(73) Proprietor: Telefonaktiebolaget LM Ericsson (publ), 164 83 Stockholm (SE); Lohmar, Thorsten, 52074 Aachen (DE)
(72) Inventor: HUNDSCHEIDT, Frank, NL-6464 GC Kerkrade (NL); KELLER, Ralf, 52146 Würselen (DE)
(74) Representative: Röthinger, Rainer
(86) International application number: PCT/EP2005/012338
(87) International publication number: WO 2007/057036

(56) References cited:
- EP-A- 1 211 851
- EP-A- 1 542 394

## Description

### Field of the Invention

The invention relates to the field of broadcast/multicast content distribution. More specifically, the invention relates to a feedback technique in context with distributing content in a hierarchically organized broadcast/multicast service area.

### Background of the Invention

Telephony, messaging and on-demand streaming services are based on Point-to-Point (PTP) communication. Broadcast and multicast services, on the other hand, are based on Point-To-Multipoint (PTM) communication. Using PTM communication, content (such as voice, text, graphics or multimedia data) is transmitted from typically a single source to multiple destinations. The expression "multicast" designates services that are solely delivered to users who have joint a particular multicast group. Usually, a multicast group includes a plurality of users interested in a particular content type. The term "broadcast" refers to delivering content to all users without the necessity of belonging to a particular group.

Several years ago, the 3^{rd}-Generation Partnership Project (3GPP) began addressing broadcast and multicast services in networks of the Global System for Mobile communications (GSM) and Wideband Code Division Multiple Access (WCDMA) types. In this context, the Multimedia Broadcast and Multicast Service (MBMS) feature has evolved. MBMS adds a plurality of broadcast/multicast-related techniques to conventional GSM or WCDMA networks. Among these techniques is a set of functions that control the broadcast/multicast delivery of services, also called the broadcast/multicast service centre (BM-SC).

In MBMS, the BM-SC is responsible for providing and delivering broadcast/multicast services. The BM-SC serves as an entry point for content-delivery services, sets up and controls MBMS transport bearers to the core network, and can additionally be used to schedule and deliver MBMS transmissions. The BM-SC also provides service announcements to user terminals. These announcements include all necessary information such as multicast service identifier, Internet Protocol (IP) multicast addresses, time of transmission, and media descriptions that a user terminal needs to join an MBMS session.

One specific technique of MBMS enables operators to provide broadcast/multicast services for geographical zones of a very fine granularity - essentially down to the size of individual radio cells. These geographical zones are configured via the MBMS service area. Typically, the service area is smaller than the coverage of the network. In the service area context, each node in the network uses a list of downstream nodes to determine to which nodes it should forward MBMS content. Thus, a hierarchically organized content distribution tree is created.

The BM-SC starts an MBMS session in a way as described in section 8.3 of the 3GPP specification TS 23.246 V.6.5.0 (2004-12) "3^{rd} Generation Partnership Project; Technical Specification Group Services and System Aspects; Multimedia Broad-cast/Multicast Service (MBMS); Architecture and Functional Description (Release 6)". When the BM-SC is ready to send content, it initiates the MBMS session with a session start message. The session start message triggers bearer resource allocation for MBMS content distribution and wake-up of user terminals.

The session start message includes a service area attribute defining the service area in which the content will be distributed. The service area attribute thus controls the establishment of the content distribution tree. In general, only network nodes which serve a service area portion referenced in the service area attribute will receive the MBMS session start message and, subsequently, the broadcast/multicast content.

In section 6.3 of the above 3GPP document, Quality-of-Service (QoS) mechanisms are defined for broadcast/multicast sessions. One of the definitions specifies that each branch of a MBMS content distribution tree shall be established with the same QoS. This approach facilitates the resource-efficient sharing of bearer resources between many users accessing the same MBMS service. When a branch of the MBMS content distribution tree has been established, it is not possible for another branch to impact the QoS of the already established branch as there is no QoS (re-)negotiation between the individual network nodes. This implies that some branches may not be established at all depending on their individual QoS requirements.

The BM-SC (and indirectly thus also a service provider) has no knowledge about which branches were successfully established in the content distribution tree and which branches could not be established because of incompatible QoS requirements or other technical issues. As a result, the BM-SC has no possibility to determine whether or not each branch of the service area can be provided with the broadcast/multicast content. This is in particular annoying for the service provider who has an interest in reliably providing (and correctly charging) a particular service delivered via the BM-SC.

While the lacking notification about the non-establishment of individual branches of a content distribution tree might still be acceptable for conventional MBMS services such as the download of a music clip, it is unacceptable in Wireless Priority Service (WPS) emergency scenarios. WPS allows authorized users to obtain priority access to radio traffic channels in situations when commercial mobile radio network congestion is blocking call attempts. Such situations may arise in response to natural or man-made disasters. Obviously, it is indispensable in such emergency scenarios to receive a notification if individual branches in a broadcast or multicast content distribution tree can not or have not been established.

Accordingly, there is a need for providing an improved messaging technique in context with a hierarchically organized broadcast/multicast service area.

EP 1 211 851 A1 relates to a method for operating a network system and to a network system operated correspondingly for improving network resource reservations and allocations. Information included in signalling messages of a given protocol, like the resource reservation protocol (RSVP), do not provide information about the actual communications status in the network. Information concerning the communications/service quality of the network are thus collected from all over the network. In particular, such information is collected from all network domains and their routers, respectively. The collected information is communicated in the network by extending the signalling messages obtained on the basis of the given protocol. Furthermore, a solution for pre-reservation of network resources is provided which avoids an unnecessary reservation of network resources and a waste of network resources for subsequent resource allocations.

EP 1 542 394 refers to methods of implementing event based distributed multicast flow accounting. Multicast-enabled routers request and aggregate traffic flow measurement information from downstream multicast-enabled routers participating in dependent multicast sub-trees. Records are kept by the multicast-enabled router regarding changes to the underlying multicast tree topology. The aggregate traffic flow measurements and topology information are reported to multicast-enabled routers upstream.

### Summary of the Invention

According to a first aspect, this need is satisfied by a method according to claim 1 and a device according to claim 16.

The method of determining for a broadcast or multicast session the availability of resources in a hierarchically organized network including on a lower hierarchy level a plurality of service area portions may further comprise the steps of sending an availability request towards at least one network node on a lower hierarchy level, and receiving the aggregated feedback message including resource availability information relating to one or more service area portions.

The network (and thus the service area) may be hierarchically organized in the form of a tree. In a tree-like organization, each network node on a higher hierarchy level is associated with zero, one or more network nodes on the next lower hierarchy level. The hierarchy tree is preferably generated anew for each broadcast or multicast session. In one example, a hierarchically organized content distribution network includes one or more core network nodes on a higher hierarchy level. At least some of the core network nodes are associated with one or more radio access network nodes on a lower hierarchy level. Each radio access network node that is involved in broadcast/multicast content distribution may serve a portion of the service area and may be configured to generate a feedback message for this service area portion.

According to a first option, the feedback message is a positive acknowledgement indicating that the requested resources are, have become or will become available. According to a second option, that can be combined with the first option, the feedback message includes a negative acknowledgement according to which the requested resources are not, have not or will not be available. According to a third option, the feedback message includes a quantitative acknowledgement. The quantitative acknowledgement indicates that a certain part of the requested resources (i.e. in the form of a percentage) is or will become available.

In one variation, the availability request aims at allocating resources for the broadcast or multicast session, and the feedback message is indicative of the availability of resources.

The service area definition (or resource allocation) may be performed independently from the availability request or, alternatively, it may be coupled with the availability request. Coupling the service area definition with the availability request may be performed by including a service area definition attribute in the availability request. The service area definition attribute may control the distribution of the availability request down to the network nodes serving individual service area portions.

The availability of resources may relate to the establishment of a branch in the hierarchically organized network. In one example, the resource availability information indicates whether an individual branch in a content distribution tree can (or cannot) be established with a requested QoS, bandwidth or any other connection parameters.

The availability request may include a feedback request indicating that a feedback message is expected. The feedback request can take the form of a flag that is only set if a feedback message is actually expected. The feedback message will then be sent and received responsive to the feedback request.

The feedback message may include resource availability information of different scope. In a first scenario, at least one received feedback message includes availability information relating to an individual service area portion. In such a scenario it is to be expected that depending on the size of the service area (i.e. depending on the number of the service area portions constituting the service area), many feedback messages will be received. At least one received feedback message is an aggregated feedback message that includes aggregated availability information relating to a plurality of service area portions. By providing one or more aggregation mechanisms upstream of the component finally receiving the aggregated feedback message, the number of feedback messages received at higher hierarchy levels can be reduced.

An intermediate network node aggregating the availability information includes a timer controlling an aggregation time interval. Upon expiry of the timer, the availability information aggregated thus far is sent in the form of an aggregated feedback message. Aggregating availability information by the intermediate network component enhances the information transfer towards the upper hierarchy levels.

In one variation, the method further comprises the steps of receiving service information, and generating the availability request based on the received service information. The service information may include one or more of a service area definition, an indication of a time criticality of a service to be distributed, an indication of a minimum part of the service area to be covered before service distribution can be initiated, and an indication of the priority of the service to be distributed.

The method may also comprise the steps of generating a service coverage report based on the least one received feedback message, and sending the service coverage report to a service provider or any other network component. Based on the service coverage report, further steps like charging for a particular service can be initiated.

The method may further comprise the steps of evaluating the availability information included in the at least one received feedback message, and deciding about initiation of content distribution to the service area (e.g. delayed, immediately, partially, etc.) dependent on a result of the evaluation. Content distribution may be initiated as soon as one or more of the following conditions are met: a predefined percentage of the service area has available resources; all service area portions have available resources; certain predefined service area portions have available resources. In the context of initiating content distribution, the method may further comprise the step of monitoring, continuously or at intervals, if at least one of the conditions for initiating content distribution is met.

The method may additionally comprise the step of queuing feedback messages. For this purpose, one or more message queues can be provided at a higher hierarchy level and/or at an intermediate hierarchy level (e.g., at the intermediate network component in charge of aggregating availability information). Feedback messages relating to content of different priorities may be queued in different queues.

According to a further aspect the method may comprise the steps of receiving, on a lower hierarchy level, an availability request, determining (e.g. locally) the availability of resources in response to receipt of the availability request, generating a feedback message including resource availability information for at least one service area portion, and sending the feedback message towards a network node on a higher hierarchy level.

If the requested resources are currently not available, the reporting method may additionally include the steps of monitoring, continuously or at intervals, the requested resources for availability, and triggering the generation of the feedback message once it is determined that the requested resources have become available.

If the availability request is directed towards resource allocation, the reporting method may further comprise the step of allocating the requested resources if the resources are or have become available. Additionally, the allocated resources may be released at a certain point (for example in response to at least one of receipt of a release message, expiration of an allocation timer and receipt of an availability request of higher priority).

The invention may be practised in the form of one or more pieces of hardware, as a software solution or as a combination thereof. As regards a software solution, a computer program product is provided that comprises program code portions for performing the steps of the methods when the computer program product is run on one or more computing devices. The computer program product may be stored on a computer readable recording medium.

As for a first hardware aspect, a device for determining for a broadcast or multicast session the availability of resources in a hierarchically organized network including on a lower hierarchy level a plurality of service area portions is provided. The device comprises a first interface for sending an availability request towards at least one network component on a lower hierarchy level, and a second interface for receiving at least one feedback message including availability information relating to one or more service area portions.

According to a complementary hardware aspect, a device for reporting for a broadcast or multicast session the availability of individual resources in a hierarchically organized network including a plurality of service area portions is provided. The reporting device is located on a lower hierarchy level in the network hierarchy and comprises a first interface for receiving an availability request, a unit for determining the availability of resources in response to receipt of the availability request, a generator for generating a feedback message including availability information for at least one service area portion, and a second interface for sending the feedback message towards a network node on a higher hierarchy level.

The devices may be adapted to perform the steps of the above methods.

### Brief Description of the Drawings

Further aspects, advantages and variations of the invention will become apparent from the following description of preferred embodiments of the invention and from the drawings, in which:
- Fig. 1: schematically shows an embodiment of a device for determining the availability of resources and an embodiment of a device for reporting the availability of resources;
- Fig. 2: shows a flowchart of a first method embodiment of the present invention;
- Fig. 3: shows a flowchart of a second method embodiment of the present invention;
- Fig. 4: schematically shows a network system including a hierarchically organized content distribution network in which the invention can be practised; and
- Fig. 5: schematically shows a messaging scenario according to the present invention.

### Description of Preferred Embodiments

In the following description, for purposes of explanation and not limitation, specific details are set forth, such as particular communication protocols, network components, etc. in order to provide a thorough understanding of the present invention. It will be apparent to one skilled in the art that the present invention may be practised in other embodiments that depart from these specific details. In particular, while the invention is primarily described in an MBMS context, it may also be practised in a WPS or any other scenario. Moreover, those skilled in the art will appreciate that the functions explained hereinbelow may be implemented using software functioning in conjunction with a programmed microprocessor or general purpose computer and/or using an Application Specific Integrated Circuit (ASIC).

It will also be appreciated that while the current invention is primarily described as a method or device, it may also be embodied in a computer program product as well as in a system comprising a computer processor and a memory coupled to the processor, wherein the memory is encoded with one or more programs for performing the methods disclosed herein.

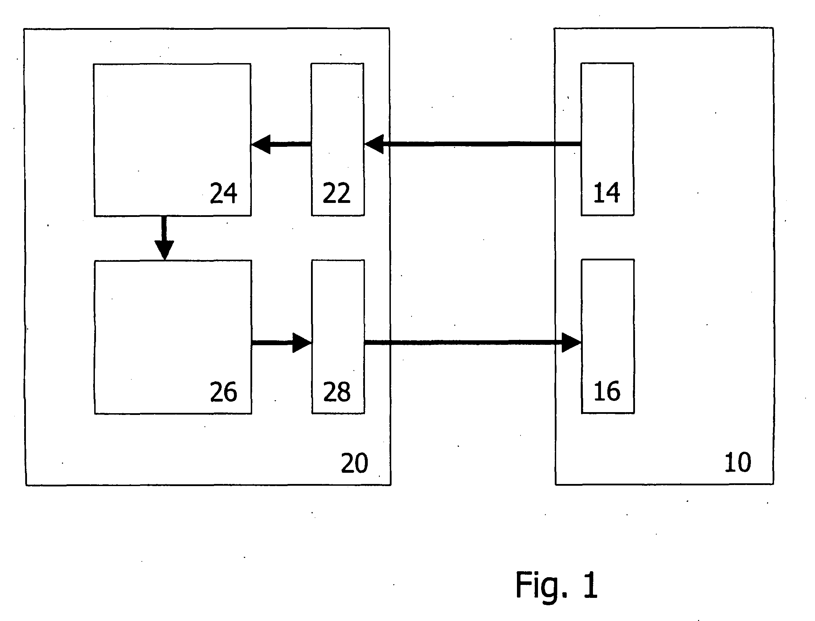

In Fig. 1, a communication system with embodiments of two devices 10, 20 that communicate with each other in context with determining for a broadcast or multicast session the availability of resources in a hierarchically organized content distribution network are shown. The network (not shown) includes at least two hierarchy levels and a plurality of individual service area portions on one or more lower hierarchy levels.

The device 10 is located on a higher hierarchy level and includes a first interface 14 for sending an availability request towards the device 20 on a lower hierarchy level. Although not illustrated in Fig. 1, several intermediate nodes on intermediate hierarchy levels may functionally be located between the device 10 on the higher hierarchy level and the device 20 on the lower hierarchy level.

In addition to the first interface 14, the device 10 comprises a second interface 16 for receiving at least one feedback message including availability information relating to one or more service area portions. In Fig. 1, the feedback message is received directly from the device 20 on the lower hierarchy level. The first and second interfaces 14, 16 may be integrated into a single interface if required. The device 10 may additionally include a generator (not shown) for generating the availability request based on service information received via a third interface (not shown) from a dedicated service component.

The device 20 on the lower hierarchy level includes a first interface 22 for receiving the availability request directly from the device 10 on the higher hierarchy level or via one or more intermediate nodes. The first interface 22 is coupled with a unit 24 for determining the availability of the requested resources in response to receipt of the availability request. The unit 24 for availability determination communicates with a generator 26. The generator 26 generates a feedback message including availability information as determined by the unit 24. The availability information has a granularity corresponding to one or more individual service area portions.

The feedback message generated by the generator 26 is communicated via a second interface 28 of the device 20 towards the device 10 on the higher hierarchy level. The feedback message may be sent directly from the device 20 on the lower hierarchy level to the device 10 on the higher hierarchy level or, in the alternative, via one or more intermediate nodes. If required, the first and second interfaces 22, 28 of the device 20 on the lower hierarchy level may be integrated into a single interface.

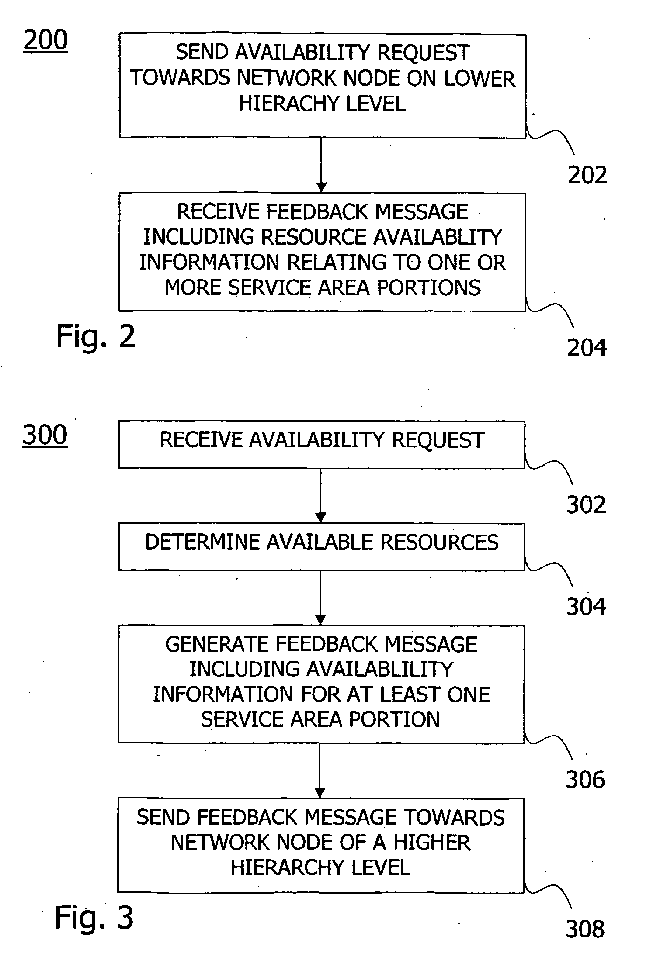

Fig. 2 shows a flowchart 200 of a method embodiment for determining, for a broadcast or multicast session, the availability of resources in a hierarchically organized network including on a lower hierarchy level a plurality of service area portions. The method starts with a first step 202 in which an availability request is sent towards at least one network node on a lower hierarchy level. In a next step 204, at least one feedback message including resource availability information relating to one or more service area portions is received.

Fig. 3 shows a flowchart 300 of a method embodiment for reporting, for a broadcast or multicast session, the availability of resources in a hierarchically organized network including on a lower hierarchy level a plurality of service area portions. The method starts, in step 302, with receiving, on a lower hierarchy level, an availability request. In response to receipt of the availability request, the availability of the requested resources is determined in step 304. In a next step 306 a feedback message including resource availability information (as determined in step 304) is generated. The availability information relates to one or more service area portions. In a last step 308, the feedback message generated in step 306 is sent towards a network node on a higher hierarchy level.

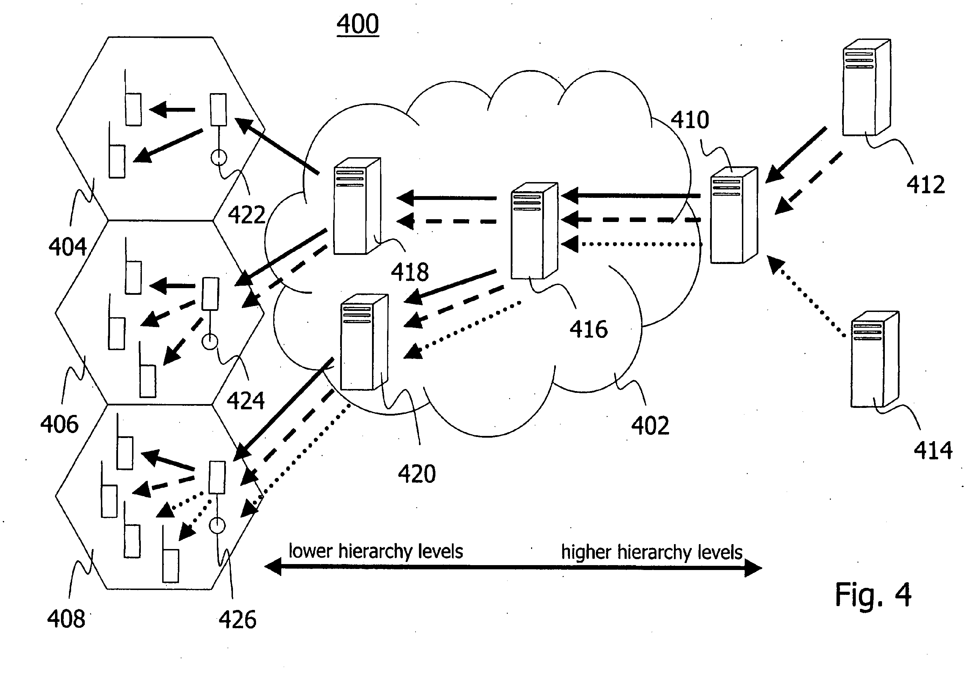

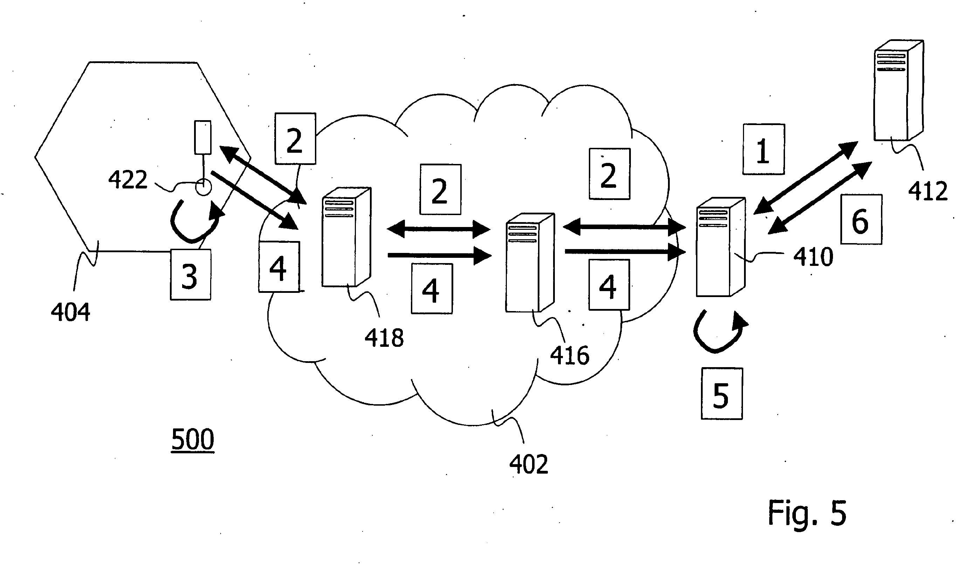

Now, a detailed MBMS embodiment will be described with reference to Figs. 4 and 5. Fig. 4 shows a hierarchical network system 400 with a hierarchically organized MBMS service area during broadcast/multicast content distribution. The network system 400 includes a core network 402 and several radio access networks 404, 406, 408 operated according to the WCDMA and/or GSM standards.

In the present MBMS context, a BM-SC 410 constitutes the central controller. In the embodiment, the BM-SC 140 is located outside the core network 402. Of course, some or all of the functions of the BM-SC 410 could also be provided from inside the core network 402. The BM-SC 410 is in communication with two servers 412, 414 operated by different service providers. The servers 412, 414 act as data sources for the multicast/broadcast content distributed via a content distribution tree as shown in Fig. 4.

In the content distribution tree of Fig. 4, the BM-SC 410 constitutes the uppermost network node ("the root"). The content recipients (i.e., the user terminals that can be reached via the individual radio access networks 404, 406, 408) constitute the leaves in the content distribution tree. As becomes apparent from Fig. 4, several intermediate network nodes are arranged on intermediate hierarchy levels between the BM-SC 410 and the user terminals. These intermediate network nodes include a Gateway GPRS Support Node (GGSN) 416 on the next lower hierarchy level from the perspective of the BM-SC 410, two Serving GSNs (SGSNs) 418, 420 on the next lower hierarchy level from the perspective of the GGSN 416, as well as several radio network controller (RNC) nodes 422, 424, 426 on the next lower hierarchy level from the perspective of the SGSNs 418, 420. In the case of a GSM radio access network, the functions of the RNCs 422, 424, 426 are fulfilled by Base Station Controller (BSC) nodes.

In the scenario of Fig. 4, the MBMS content is distributed to the multiple user terminals through a MBMS content distribution tree that has the BM-SC 410 at its root, and typically one or more GGSNs 416, many SGSNs 418, 420 and a plurality of RNCs/BSCs 422, 424, 426 at the next lower hierarchy levels. As shown in Fig. 4, the servers 412, 414 deliver broadcast/multicast content via just three streams (one stream per channel) to the BM-SC 410. The streams are denoted by different types of arrows (with respective straight, dashed and dotted lines). From the BM-SC 410, the content data included in the three streams are distributed in a resource-efficient manner. To this end, each node in the core network 402 uses a list of downstream nodes to determine to which nodes on the next-lower hierarchy level the content is to be distributed. At the GGSN level, the list contains every SGSN to which the content is to be sent. At the SGSN level, the list contains every RNC/BSC node connected to the particular SGSN or, preferably, only those that need to receive the content. Radio resources in the radio access networks 404, 406, 408 need only be allocated for three broadcast/multicast sessions instead of for a high amount of individual conventional PTP transmissions. Servers, network resources and cell load are thus to a large extent independent of the total number of broadcast/multicast content recipients.

Before content distribution as shown in Fig. 4 can start, an MBMS session start procedure has to be initiated by the BM-SC 410. During the session start procedure, the BM-SC 410 requests allocation (activation) of all bearer resources required for the transfer of MBMS content and notification of interested user terminals of the imminent start of content transfer. During the session start procedure, MBMS session attributes such as QoS, MBMS service area definitions, estimated session duration and, if required, emergency/WPS indicators and/or feedback indicators are provided to the GGSN 416 and SGSNs 418, 420 that have previously registered for the corresponding MBMS service and to all RNCs/BSCs 422, 424, 426 that are connected to one of the registered SGSNs 418, 420. In the present embodiment, the session start procedure is also used to obtain knowledge about the status of the resource allocations in the radio access networks 404, 406 and 408. In this context, the BM-SC 410 gets feedback about which parts of the service area will be, have been or can potentially be reached for content distribution.

In the following, an embodiment of a messaging scenario 500 for a MBMS session start procedure will exemplarily be described with reference to Fig. 5. For the sake of simplicity, the messaging scenario will only be described in relation to a single server 412 and a single RNC/BSC 422.

In the embodiment shown in Fig. 5, the MBMS session start procedure starts with an optional first step in which the BM-SC 410 is informed by the service provider operating the server 412 about the required treatment of the content distribution. To this end, the server 412 communicates one or more content-related service parameters to the BM-SC 410. For example, a first parameter may indicate the priority or the urgency of the content that is to be distributed. A second parameter may indicate whether or not the service provider wishes to receive a service area coverage report after the content has been distributed. Optionally, the service area coverage report can be requested by the service provider from the BM-SC 410 prior to initiation of content distribution. The service area coverage report can be used for accounting or for renegotiating content distribution between the service provider and a network operator.

Depending on the actually covered service area, the service provider may decide about the initiation of content distribution and may inform, via the server 412, the BM-SC 410 accordingly. The service provider may for example indicate whether content distribution shall be initiated immediately or at a later point in time. In this context, the server 412 may communicate to the BM-SC 410 a third parameter indicating a minimum part of the target service area that must be covered before content distribution can be initiated by the BM-SC 410.

A fourth parameter that can be communicated from the server 412 to the BM-SC 410 may include information about whether or not content distribution is time critical. This information may take the form of a maximum queuing time. In the case the content that is to be distributed is not time critical, the BM-SC 410 may freely decide itself about the point in time at which the content will be distributed. This decision may be based on the time of the day, on the actual service area coverage or on the distribution efficiency (the BM-SC 410 may for example try to avoid distributing the same content twice or even more often). In case content distribution is time critical, the BM-SC 410 may start distributing the content to the part of the service area that reported a successful resource allocation.

Once the first step as shown in Fig. 5 has been concluded and the BM-SC 410 has been informed by the service provider (or, in the alternative, has implemented default settings stored in a local database) about the treatment of a particular content that is to be distributed, in a second step the bearer resources required for the transfer of the content data in the network are allocated. To this end, a session start request message is sent from the BM-SC 410 to the GGSN 416. The session start request message received by the GGSN 416 indicates the impending start of the content distribution and provides the required session attributes. A "list of downstream nodes" parameter is also received with the session start request message from the BM-SC 410. The GGSN 416 acknowledges receipt of the session start request message with a session start response message. The GGSN 416 then likewise sends a session start request message with the session attributes to the SGSNs (here SGSN 418) listed in the "list of downstream nodes" parameter. The SGSN 418 stores the session attributes and responds to the GGSN 416 with a session start response message. The SGSN 418 then sends a session start request message including the session attributes to each RNC and/or each BNC (here RNC/BNC 422) that is connected to the SGSN 418. The RNC/BSC 422 stores the session attributes included in the session start request message received from the SGSN 418 and responds to the SGSN 418 with a session start response message.

The request/response messaging described above is also explained in section 8.3 of the above 3GPP document. However, and departing from the standard messaging scenario described in the 3GPP document, the attributes included in the request messages additionally comprise a flag indicating whether or not the BM-SC 410 expects a feedback message concerning the availability of requested resources. Additionally, the attributes may include a flag indicating whether or not in the case of unavailable resources, any of the downstream nodes shall continuously try to allocate the resources and generate a feedback message once the requested resources have become available again. According to a still further option, the attributes may include a flag indicating to the downstream nodes that resources, once allocated, shall be kept allocated until explicitly released (e.g., via a MBMS session stop command). According to a still further variant, the additional attributes may include a priority flag indicating an emergency/WPS content distribution session.

With reference to Fig. 5, the processing continue with a third step in which the RNC/BSC 422, after receipt of the session start request message and after having sent the corresponding session start response message, locally determines the availability of the requested resources and generates a feedback message including resource availability information for the service area portion (e.g. the corresponding radio access network cell in the present embodiment or a logical aggregation of cells or cell parts) served by the RNC/BSC 422 similar to steps 304 and 306 of Fig. 3. In this context, the session start request message received by the RNC/BSC 422 is interpreted as a resource availability request. Optionally, feedback messages are generated by the RNC/BSC 422 only if expressly requested by the BM-SC 410 in the session start request message

The RNC/BSC 422 has various options concerning the type of availability information that is to be included into its feedback message. According to a first option, the availability information is a positive resource acknowledgement indicating that a certain branch (including a sub-tree or leaves) of the content distribution tree can be established and the associated resources can be allocated. According to a second option, the availability information relates to a negative resource acknowledgment if the branch cannot be established. According to the first and second option, availability information will generally be received not for all branches at the BM-SC 410. Therefore, according to a third option combining the first and second options, the RNC/BSC 422 always generates a feedback message that includes either a positive or a negative resource acknowledgement (e.g. in the form of a positive/negative feedback flag).

The feedback message may also include an indication of the service area portion (or the service area portions in the case of an aggregated feedback message) associated with the feedback message. The indication may take the form of a service area parameter such as a single cell ID, a list of cell IDs, a service area ID, a list of service area IDs or a combination thereof.

In the case the RNC/BSC 422 performs resource allocation in response to receipt of the session start request message, the feedback message may additionally include a time value indicating how long the resources will remain allocated.

In a fourth messaging step shown in Fig. 5, the feedback message generated by the RNC/BSC 422 is sent via the SGSN 418 and the GGSN 416 to the BM-SC 410. By this, the BM-SC 410 receives feedback on the branches that can or will be established and/or on the branches for which the required radio resources for content transfer will or will not be allocated. There are several possibilities for reporting the multiple feedback messages generated by the plurality of RCNs/BSCs to the BM-SC 410.

According to a first exemplary reporting variant not covered by the present invention, the RNC/BSC 422 sends its feedback message including the resource availability information directly to the BM-SC 410. According to this variant, the upper network nodes 416, 418 in the communication path between the RNC/BSC 422 and the BM-SC 410 simply forward the feedback message without any processing. The first variant has the advantage of the least reporting delay and allows for a direct communication between the RNC/BSC 422 and the BM-SC 410.

Since the service area typically includes a large number of RNCs/BSCs, the BM-SC 410 will receive a high amount of feedback messages in the first reporting variant. In some situations it might be desirable to reduce the number of feedback messages received at the BM-SC 410. Therefore, according to a second reporting variant, the availability information included in the feedback messages from the RNCs/BSCs is repeatedly aggregated by the intermediate network nodes 416, 418. In other words, the SGSN 418 aggregates the availability information included in the feedback messages received from the connected RNCs/BSCs to generate an aggregated feedback message, and the GGSN 416 further aggregates availability information included in the aggregated feedback messages received from the connected SGSNs before sending its aggregated feedback message to the BM-SC 410. Accordingly, the availability information is aggregated on each hierarchy level below the BM-SC 410, so that the amount of feedback messages finally received at the BM-SC will be drastically reduced.

The second reporting variant introduces a reporting delay due to the repeated aggregation of the availability information. In order to reduce the reporting delay, in a third reporting variant the availability information is aggregated only on a single hierarchy level. According to one scenario, the availability information included in the feedback messages from the RNCs/BSCs is aggregated only on an SGNS level, here by the SGSN 418. The SGSN 418 than reports the aggregated availability information in the form of an aggregated feedback message (without any further aggregation at the GGSN 416) to the BM-SC 410. Using the third reporting variant the amount of feedback messages received at the BM-SC 410 is reduced (as in the second reporting variant), while at the same time the reporting delay is decreased (as in the first reporting variant).

The reporting delay resulting from the aggregation according to the second and third reporting variants is a result of two delay components. The first delay component is introduced by the aggregation processing operations performed by the intermediate network nodes 416, 418. The second (and more significant) delay component results from the fact that the aggregating network nodes 416, 418 must wait for the feedback messages of all associated network nodes on the next lower hierarchy level before they can send a complete aggregated feedback message towards the next higher hierarchy level.

In order to get control of the second delay component, at least one of the aggregating network nodes 416, 418 is equipped with an aggregation timer. The aggregation timer specifies an aggregation time interval that is started for example upon receipt of the last session start response message or the first feedback message from the network nodes on the next lower hierarchy level. Feedback messages that are received while the aggregation timer is active are aggregated with respect to the availability information included therein to prepare an aggregated feedback message. When the aggregation timer expires, the aggregated feedback message including availability information collected until this point in time is sent to the network node on the next higher hierarchy level and, at least in some scenarios, the timer is started anew.

Under control of the aggregation timer, the aggregating network nodes thus do not wait until all connected nodes of the next lower hierarchy level have sent their feedback message. Rather, an aggregated feedback message is generated and sent to the network node on the next higher hierarchy level each time the aggregation timer expires until availability information has been collected from all network nodes located on the next lower hierarchy level. Alternatively, it might be specified that the timer is started only a predefined number of times in order to avoid an infinite timer loop (e.g. in cases where certain downstream nodes are prevented from generating feedback messages due to technical or other problems). Utilization of an aggregation timer is particularly useful in emergency/WPS scenarios to avoid excessive delays in content distribution due to slow communication links in a only small part of the target service area.

The aggregation timer is also useful in live broadcasting/multicasting sessions to avoid that all participants will miss the session start in cases where only a small part of the target service area experiences slow communication links. In such a scenario, each node in the communication chain may recalculate an appropriate timer value for the rest of the downlink path and communicate the calculated timer value to the network node on the next lowest hierarchy level. In one example, the BM-SC 410 sends a timer value of 0.9 s to the GGSN 416, and the GGSN 416 sends a timer value of 0.8 s to the SGSN 418, which sends a timer value of 0.7 s to the RNC/BNC 422. Instead of calculating the timer values in a distributed fashion by each of the network nodes individually, the timer values could also be provided centrally by either the BM-SC 410 or the GGSN 416. In each case the timer values may be adapted based on historical information to implement a learning system.

Upon receipt of the individual or aggregated feedback messages transmitted in the fourth step of the messaging scenario shown in Fig. 5, the BM-SC 410 starts evaluating the received feedback messages in a fifth step. If the BM-SC 410 determines that all service area portions of the target service area can be reached for content distribution, the BM-SC 410 initiates content distribution in a conventional manner. If, however, the BM-SC 410 determines that one or more service area portions cannot be reached for content distribution, the BM-SC 410 has several options how to proceed further.

According to a first option, the BM-SC 410 decides not to distribute the content at all if less than the complete target service area can be reached for content distribution. In this case the BM-SC 410 may notify the server 412 thereof, wait for a repetition of the content distribution request from the server 412 (step 6 in Fig. 5) and then initiate a new session start procedure as outlined above.

According to a second option, the BM-SC 410 queues the feedback messages and waits until all corresponding network nodes have reported that resources for content distribution are available now. Queuing may be performed such that the BM-SC 410 continuously or at regular intervals determines based on the queued feedback messages if all or at least a predefined percentage of the target service area has available resources for content distribution. Such an approach is particularly useful if insufficient or unsuccessful resource coverage happens only very seldom. According to a further approach, all network nodes are informed in step 2 of the messaging scenario shown in Fig. 5 about what to do in the case the requested resources can not be allocated. For example, the network nodes, and in particular the RNCs/BSCs, can be instructed to monitor the requested resources for availability and to generate their feedback message (with a positive resource acknowledgement) once the requested resources have become available. Alternatively, the network nodes may be instructed to await possible further instructions from BM-SC 410 in the case of an unsuccessful resource allocation. Message queues may also be implemented on hierarchy levels below the BM-SC 410. The BM-SC 410 may for example request a queuing of feedback messages in the RNCs/BSCs as for circuit-switched voice calls and demand to keep availability information only in the GGSN 416 and/or the SGSN 418.

According to a third option for handling incomplete target service area coverage, the BM-SC 410 provides the content only to the part of the service area for which a successful resource allocation was reported. For the remaining part of the target service area the BM-SC 410 queues the feedback messages as discussed in context with the second option above.

According to a fourth option, the BM-SC 410 distributes the content only to the part of the service area for which a successful resource allocation was reported and simply ignores the part of the service area that cannot be covered.

The resource availability information derived by the BM-SC 410 from the feedback messages can be sent in the form of a service area coverage report to the server 412 operated by the corresponding service provider (step 6 in the messaging scenario Fig. 5). In response to receipt of the service area coverage report at the server 412, a renegotiation between the service provider and the BM-SC 410 concerning content distribution can be initiated.

As has become apparent from the above, in certain cases the session will not start unless all or at least a certain minimum part of the target service area (e.g. a minimum number of user terminals) can be reached. In such a case the BM-SC 410 may request feedback messages for the purpose of determining resource coverage without actually establishing the content distribution tree. This can be communicated to the network nodes 416, 418, 422 on the lower hierarchy levels in the second step of the messaging scenario shown in Fig. 5.

The availability information included in the feedback message can have a binary content (positive/negative acknowledgement) or, in the alternative, be indicative of the probability of a successful resource location. The probability will for example be low in the case of a high cell load.

It will also be an option that the BM-SC 410 requests resource allocation even if it only intends to find out if a certain minimum part of the target service area (e.g. a minimum number of user terminals) can be reached. The allocated resources could then still be released (e.g. by a dedicated release message) if certain minimum criteria are not met. Optionally, the allocated resources are reserved, but may be released in cases of new availability requests or of availability requests of higher priority.

In the above messaging embodiments, the feedback mechanisms have mainly been described in context with conventional MBMS content distribution. However, the feedback mechanisms may also be advantageously used in emergency scenarios for WPS or Government Emergency Telecommunication Service (GETS) broadcast/multicast content distribution. It is also possible to introduce WPS/GETS features into MBMS sessions. To this end, an emergency attribute may be added to the session start request messages explained above in context with messaging step 2 of Fig. 5.

The emergency attribute can be implemented as flag that is set in the case WPS/GETS broadcast/multicast content distribution is requested. The emergency flag may be used to control the generation of feedback messages. In one scenario, the feedback messaging described with reference to Figs. 1 to 5 is only implemented in emergency scenarios, whereas no feedback is provided in the case of a conventional MBMS broadcast/multicast sessions. The emergency flag may also be used to indicate to the individual network nodes that currently occupied resources must immediately be freed for the distribution of emergency content.

While the invention has been described with respect to particular embodiments, those skilled in the art will recognize that the present invention is not limited thereto. Therefore, it is to be understood that the present disclosure is only illustrative and that it is intended that the invention be limited only be scope of the claims appended hereto.

## Claims

1. A method of forwarding for a broadcast or multicast session information relating to the availability of resources in a hierarchically organized network including on a lower hierarchy level a plurality of service area portions (404, 406, 408), the method comprising the following steps performed before an initiation of a content distribution:
- receiving at a network node (416, 418, 420) feedback messages including availability information for the service area portions (404, 406, 408);
- generating an aggregated feedback message by aggregating availability information included in the received feedback messages; and
- sending the aggregated feedback message to a network node (410) on a higher hierarchy level;
**characterized in that** the network node (416, 418, 420) aggregating the availability information includes a timer controlling an aggregation time interval, wherein the aggregated feedback message is sent to the network node (410) on the higher hierarchy level upon expiry of the timer.

2. The method of claim 1, further comprising the following steps performed by the network node (410) on the higher hierarchy level:
- sending an availability request towards network nodes (422, 424, 426) on a lower hierarchy level; and
- receiving the aggregated feedback message that includes the aggregated availability information relating to the plurality of service area portions.

3. The method of claim 2, wherein the availability request aims at allocating resources for the broadcast or multicast session, and wherein each feedback message is indicative of the availability of the resources to be allocated.

4. The method of claim 2 or 3, wherein the availability request includes a service area definition attribute controlling the distribution of the availability request among network nodes (416, 418, 420, 422, 424, 426) serving individual service area portions.

5. The method of one of claims 1 to 4, wherein the availability of resources relates to the establishment of a branch in the hierarchically organized network.

6. The method of one of claims 2 to 5, wherein the availability request includes a feedback request, and wherein the aggregated feedback message is received responsive to the feedback request.

7. The method of one of claims 1 to 5, wherein each feedback message includes availability information relating to an individual service area portion.

8. The method of one of claims 2 to 7, further comprising the following steps performed by the network node (410) on the higher hierarchy level:
- receiving service information; and
- generating the availability request based on the received service information.

9. The method of one of claims 2 to 8, further comprising the following steps performed by a broadcast/multicast service centre (410):
- evaluating the availability information included in the aggregated feedback message; and
- deciding about the initiation of the content distribution to the service area dependent on a result of the evaluation.

10. The method of one of claims 1 to 9, comprising the following steps performed by a network node (422, 424, 426) on the lower hierarchy level:
- receiving, on the lower hierarchy level, the availability request;
- determining the availability of resources in response to receipt of the availability request; and
generating a feedback message including the resource availability information for one service area portion.

11. The method of claim 10, further comprising performing the following steps by the network node (422, 424, 426) on the lower hierarchy level if the requested resources are currently not available:
- monitoring the requested resources for availability; and
- triggering the generation of the feedback message once it is determined that the requested resources have or will become available.

12. The method of claim 11 or 12, further comprising the step performed by the network node (422, 424, 426) on the lower hierarchy level of allocating the requested resources if the resources are or have become available.

13. The method of claim 12, further comprising the step of releasing the allocated resources in response to a least one of receipt of a release message, expiration of a timer and receipt of an availability request of higher priority.

14. A computer program product comprising program code portions for performing the steps of one of claims 1 to 13 when the computer program product is run on one or more computing devices.

15. The computer program product of claim 14, stored on a computer-readable recording medium.

16. A network node (416, 418, 420) for forwarding for a broadcast or multicast session information relating to the availability of resources in a hierarchically organized network including on a lower hierarchy level a plurality of service area portions (404, 406, 408), the network node comprising the following components adapted to be operated before an initiation of a content distribution :
- a first interface for receiving feedback messages including availability information for service area portions;
- a generator for generating an aggregated feedback message by aggregating availability information included in the received feedback messages; and
- a second interface for sending the aggregated feedback message to a network node (410) on a higher hierarchy level;
**characterized by** a timer controlling an aggregation time interval, wherein the aggregated feedback message is sent upon expiry of the timer.

## Patentansprüche

1. Verfahren zur Weiterleitung für eine Broadcast- oder Multicast-Sitzung von Informationen in Bezug auf die Verfügbarkeit von Betriebsmitteln in einem hierarchisch organisierten Netz, das auf einer niedrigeren Hierarchiestufe eine Mehrzahl von Dienstbereichsabschnitten (404, 406, 408) umfasst, wobei das Verfahren die folgenden Schritte umfasst, die vor einer Initiierung einer Inhaltsverteilung ausgeführt werden:
- Empfangen an einem Netzknoten (416, 418, 420) von Rückmeldungsnachrichten, die Verfügbarkeitsinformationen für die Dienstbereichsabschnitte (404, 406, 408) umfassen;
- Erzeugen einer Sammelrückmeldungsnachricht durch Sammeln von Verfügbarkeitsinformationen, die in den empfangenen Rückmeldungsnachrichten enthalten sind; und
- Senden der Sammelrückmeldungsnachricht an einen Netzknoten (410) auf einer höheren Hierarchiestufe;
**dadurch gekennzeichnet, dass** der Netzknoten (416, 418, 420), der die Verfügbarkeitsinformationen sammelt, einen Zeitgeber umfasst, der ein Sammelzeitintervall steuert, wobei die Sammelrückmeldungsnachricht bei Ablauf des Zeitgebers an den Netzknoten (410) auf der höheren Hierarchiestufe gesendet wird.

2. Verfahren nach Anspruch 1, ferner umfassend die folgenden Schritte, die durch den Netzknoten (410) auf der höheren Hierarchiestufe ausgeführt werden:
- Senden einer Verfügbarkeitsanfrage an Netzknoten (422, 424, 426) auf einer niedrigeren Hierarchiestufe; und
- Empfangen der Sammelrückmeldungsnachricht, welche die gesammelten Verfügbarkeitsinformationen in Bezug auf die Mehrzahl von Dienstbereichsabschnitte umfasst.

3. Verfahren nach Anspruch 2, wobei die Verfügbarkeitsanfrage ein Zuordnen von Betriebsmitteln für die Broadcast- oder Multicast-Sitzung beabsichtigt, und wobei jede Rückmeldungsnachricht die Verfügbarkeit der zuzuordnenden Betriebsmittel anzeigt.

4. Verfahren nach Anspruch 2 oder 3, wobei die Verfügbarkeitsanfrage ein Dienstbereichs-Definitionsattribut umfasst, das die Verteilung der Verfügbarkeitsanfrage unter Netzknoten (416, 418, 420, 422, 424, 426) steuert, welche einzelne Dienstbereichsabschnitte versorgen.

5. Verfahren nach einem der Ansprüche 1 bis 4, wobei die Verfügbarkeit von Betriebsmitteln den Aufbau eines Zweiges im hierarchisch organisierten Netz betrifft.

6. Verfahren nach einem der Ansprüche 2 bis 5, wobei die Verfügbarkeitsanfrage eine Rückmeldungsanforderung umfasst, und wobei die Sammelrückmeldungsnachricht als Antwort auf die Rückmeldungsanforderung empfangen wird.

7. Verfahren nach einem der Ansprüche 1 bis 5, wobei jede Rückmeldungsnachricht Verfügbarkeitsinformationen in Bezug auf einen einzelnen Dienstbereichsabschnitt umfasst.

8. Verfahren nach einem der Ansprüche 2 bis 7, ferner umfassend die folgenden Schritte, die durch den Netzknoten (410) auf der höheren Hierarchiestufe ausgeführt werden:
- Empfangen von Dienstinformationen; und
- Erzeugen der Verfügbarkeitsanfrage basierend auf den empfangenen Dienstinformationen.

9. Verfahren nach einem der Ansprüche 2 bis 8, ferner umfassend die folgenden Schritte, die durch eine Broadcast-/Multicast-Dienstzentrale (410) ausgeführt werden:
- Beurteilen der Verfügbarkeitsinformationen, die in der Sammelrückmeldungsnachricht enthalten sind; und
- Entscheiden über die Initiierung der Inhaltsverteilung an den Dienstbereich in Abhängigkeit von einem Ergebnis der Beurteilung.

10. Verfahren nach einem der Ansprüche 1 bis 9, ferner umfassend die folgenden Schritte, die durch einen Netzknoten (422, 424, 426) auf der niedrigeren Hierarchiestufe ausgeführt werden:
- Empfangen der Verfügbarkeitsanfrage auf der niedrigeren Hierarchiestufe;
- Bestimmen der Verfügbarkeit von Betriebsmitteln als Antwort auf den Empfang der Verfügbarkeitsanfrage; und
- Erzeugen einer Rückmeldungsnachricht, welche die Informationen über die Betriebsmittel- verfügbarkeit für einen Dienstbereichsabschnitt umfasst.

11. Verfahren nach Anspruch 10, ferner umfassend ein Ausführen der folgenden Schritte durch den Netzknoten (422, 424, 426) auf der niedrigeren Hierarchiestufe, wenn die angefragten Betriebsmittel gegenwärtig nicht verfügbar sind:
- Überwachen der angefragten Betriebsmittel auf Verfügbarkeit; und
- Auslösen der Erzeugung der Rückmeldungsnachricht, sobald bestimmt wird, dass die angefragten Betriebsmittel verfügbar geworden sind oder verfügbar werden.

12. Verfahren nach Anspruch 11 oder 12, ferner umfassend den Schritt, der durch den Netzknoten (422, 424, 426) auf der niedrigeren Hierarchiestufe ausgeführt wird, des Zuordnens der angefragten Betriebsmittel, wenn die angefragten Betriebsmittel verfügbar sind oder verfügbar geworden sind.

13. Verfahren nach Anspruch 12, ferner umfassend den Schritt des Freigebens der zugeordneten Betriebsmittel als Reaktion auf mindestens eines von einem Empfang einer Freigabenachricht, einem Ablauf eines Zeitgebers und einem Empfang einer Verfügbarkeitsanfrage höherer Priorität.

14. Computerprogrammprodukt, umfassend Programmcodeabschnitte zum Durchführen der Schritte nach einem der vorhergehenden Ansprüche 1 bis 13, wenn das Computerprogrammprodukt auf einem oder mehreren Rechengeräten ausgeführt wird.

15. Computerprogrammprodukt nach Anspruch 14, gespeichert auf einem computerlesbaren Aufzeichnungsmedium.

16. Netzknoten (416, 418, 420) zum Weiterleiten für eine Broadcast- oder Multicast-Sitzung von Informationen in Bezug auf die Verfügbarkeit von Betriebsmitteln in einem hierarchisch organisierten Netz, das auf einer niedrigeren Hierarchiestufe eine Mehrzahl von Dienstbereichsabschnitten (404, 406, 408) umfasst, wobei der Netzknoten die folgenden Komponenten umfasst, die so ausgelegt sind, dass sie vor einer Initiierung einer Inhaltsverteilung betrieben werden:
- eine erste Schnittstelle zum Empfangen von Rückmeldungsnachrichten, welche Verfügbarkeitsinformationen für Dienstbereichsabschnitte umfassen;
- eine Erzeugungseinrichtung zum Erzeugen einer Sammelrückmeldungsnachricht durch Sammeln von Verfügbarkeitsinformationen, die in den empfangenen Rückmeldungsnachrichten enthalten sind; und
- eine zweite Schnittstelle zum Senden der Sammelrückmeldungsnachricht an einen Netzknoten (410) auf einer höheren Hierarchiestufe;
**gekennzeichnet durch** einen Zeitgeber, der ein Sammelzeitintervall steuert, wobei die Sammelrückmeldungsnachricht bei Ablauf des Zeitgebers gesendet wird.

## Revendications

1. Procédé d'acheminement d'une information de session de diffusion ou multidiffusion relative à la disponibilité des ressources dans un réseau organisé hiérarchiquement incluant sur un niveau hiérarchique plus bas une pluralité de portions de zone de desserte (404, 406, 408), le procédé comprend les étapes suivantes effectuées avant une amorce d'une distribution de contenu :
- recevoir au niveau d'un noeud de réseau (416, 418, 420) des messages rétroactifs incluant une information de disponibilité pour les portions de zone de desserte (404, 406, 408) ;
- générer un message rétroactif agrégé en agrégeant l'information de disponibilité incluse dans les messages rétroactifs reçus ; et
- envoyer le message rétroactif agrégé à un noeud de réseau (410) sur un niveau hiérarchique plus haut ;
**caractérisé en ce que** le noeud de réseau (416, 418, 420) agrégeant l'information de disponibilité inclut un temporisateur commandant un intervalle de temps d'agrégation, dans lequel le message rétroactif agrégé est envoyé au noeud de réseau (410) sur e niveau hiérarchique plus haut à l'expiration du temporisateur.

2. Procédé selon la revendication 1, comprenant en outre les étapes suivantes effectuées par le noeud de réseau (410) sur le niveau hiérarchique plus haut :
- envoyer une demande de disponibilité vers les noeuds de réseau (422, 424, 426) sur un niveau hiérarchique plus bas ; et
- recevoir le message rétroactif agrégé qui inclut l'information de disponibilité agrégée relative à la pluralité de portions de zone de desserte.

3. Procédé selon la revendication 2, dans lequel la demande de disponibilité vise à allouer des ressources pour la session de diffusion ou multidiffusion, et dans lequel chaque message de rétroaction est indicateur de la disponibilité des ressources à allouer.

4. Procédé selon les revendications 2 ou 3, dans lequel la demande de disponibilité inclut un attribut de définition de zone de desserte commandant la distribution de la demande de disponibilité parmi les noeuds de réseau (416, 418, 420, 422, 424, 426) desservant les portions de zone de desserte individuelles.

5. Procédé selon une des revendications 1 à 4, dans lequel la disponibilité de ressources se rapporte à l'établissement d'une branche dans le réseau organisé hiérarchiquement.

6. Procédé selon une des revendications 2 à 5, dans lequel la demande de disponibilité inclut une demande rétroactive, et dans lequel le message rétroactif agrégé est reçu en réponse à la demande rétroactive.

7. Procédé selon une des revendications 1 à 5, dans lequel chaque message rétroactif inclut une information de disponibilité relative à une portion de zone de desserte individuelle.

8. Procédé selon une des revendications 2 à 7, comprenant en outre les étapes suivantes effectuées par le noeud de réseau (410) sur le niveau hiérarchique plus haut :
- recevoir une information de desserte ; et
- générer la demande de disponibilité sur la base de l'information de service reçue.

9. Procédé selon une des revendications 2 à 8, comprenant en outre les étapes suivantes effectuées par un centre de desserte de diffusion/multidiffusion (410) :
- évaluer l'information de disponibilité incluse dans le message rétroactif agrégé ; et
- décider de l'amorce de la distribution de contenu à la zone de desserte en fonction d'un résultat de l'évaluation.

10. Procédé selon une des revendications 1 à 9, comprenant les étapes suivantes effectuées par un noeud de réseau (422, 424, 426) sur le niveau hiérarchique plus bas :
- recevoir, sur le niveau hiérarchique plus bas, la demande de disponibilité ;
- déterminer la disponibilité des ressources en réponse à la réception de la demande de disponibilité ; et
- générer un message rétroactif incluant l'information de disponibilité de ressource pour une portion de zone de desserte.

11. Procédé selon la revendication 10, comprenant en outre d'effectuer les étapes suivantes par le noeud de réseau (422, 424, 426) sur le niveau hiérarchique plus bas si les ressources demandées sont actuellement non disponibles :
- surveiller la disponibilité des ressources demandées ; et
- déclencher la génération du message rétroactif une fois qu'il est déterminé sur les ressources demandées sont devenues ou deviendront disponibles.

12. Procédé selon les revendications 11 ou 12, comprenant en outre l'étape effectuée par le noeud de réseau (422, 424, 426) sur le niveau hiérarchique plus bas d'allocation des ressources demandées si les ressources sont ou sont devenues disponibles.

13. Procédé selon la revendication 12, comprenant en outre l'étape de libération des ressources allouées en réponse à au moins une réception d'un message de libération, l'expiration d'un temporisateur et la réception d'une demande de disponibilité de priorité plus haute.

14. Produit de programme informatique comprenant des portions de code de programme pour effectuer les étapes d'une des revendications 1 à 13 quand le produit de programme informatique est exécuté sur un ou des dispositifs informatiques.

15. Produit de programme informatique selon la revendication 14, mémorisé sur un support d'enregistrement lisible par ordinateur.

16. Noeud de réseau (416, 418, 420) pour acheminer une information de session de diffusion ou multidiffusion relative à la disponibilité des ressources dans u réseau organisé hiérarchiquement incluant sur un niveau hiérarchique plus bas une pluralité de portions de zone de desserte (404, 406, 408), le noeud de réseau comprenant les composants suivants adaptés pour être actionnés avant une amorce d'une distribution de contenu :
- une première interface pour recevoir des messages rétroactifs incluant une information de disponibilité pour des portions de zone de desserte :
- un générateur pour générer un message rétroactif agrégé en agrégeant une information de disponibilité incluse dans les messages rétroactifs reçus ; et
- une seconde interface pour envoyer le message rétroactif agrégé à un noeud de réseau (410) sur un niveau hiérarchique plus haut ;
**caractérisé par** un temporisateur commandant un intervalle de temps d'agrégation, dans lequel le message rétroactif agrégé est envoyé à l'expiration du temporisateur.
